# FASCICULE DE BREVET EUROPEEN

(11) **EP 1 387 977 B1**
(45) Date de publication et mention de la délivrance du brevet: **21.12.2005**
(21) Numéro de dépôt: 02735467.9
(22) Date de dépôt: 19.04.2002
(51) Int. Cl.: F16L 37/32

(54) **ROBINET-DETENDEUR MUNI D'UN RACCORD ADAPTE A LA CONNEXION D'UNE PRISE UTILISATEUR**
DRUCKREDUZIERVENTIL MIT EINEM ANSCHLUSSSTÜCK VERBINDBAR MIT EINER BENUTZERKUPPLUNG
EXPANSION VALVE FITTED WITH A CONNECTOR THAT IS DESIGNED FOR THE CONNECTION OF A USER SOCKET

(30) Priorité: 10.05.2001 FR 0106173
(43) Date de publication de la demande: 11.02.2004
(73) Titulaire: L'air Liquide, S.A. à Directoire et Conseil de Surveillance pour l'Etude et l'Exploitation des Procédés Georges Claude, 75321 Paris Cedex 07 (FR); FRO Srl, 37135 Verone (IT)
(72) Inventeur: ARZENTON, Marco, I-37128 Verona (IT); GOUNOT, Etienne, F-75009 Paris (FR)
(74) Mandataire: Pittis, Olivier
(86) Numéro de dépôt international: PCT/FR2002/001360
(87) Numéro de publication internationale: WO 2002/090813

(56) Documents cités:
- EP-A- 0 747 796
- FR-A- 1 200 023
- US-A- 2 837 352
- US-A- 4 949 745

## Description

L'invention concerne un robinet-détendeur dont le raccord de sortie de gaz comporte un profil externe adapté à la réception d'une prise utilisateur ayant un profil interne complémentaire, de préférence un robinet-détendeur à pression de détente non-réglable pour bouteilles de gaz, en particulier celles utilisables dans le domaine alimentaire, notamment pour les boissons, dans le domaine du soudage, dans les laboratoires ou analogues,

Les ensembles robinets de gaz à détendeurs intégrés existants, encore appelés robinets-détendeurs, tel celui décrit par le document EP-A-747796, disposent habituellement au moins d'un dispositif d'interruption de la sortie de gaz haute pression, d'un détendeur, d'un système de réglage de débit et de pression, et d'un raccord pour la sortie de gaz auquel peut se raccorder l'utilisateur.

Le dispositif d'interruption de la sortie de gaz haute pression se compose principalement soit du clapet du détendeur lorsque l'ensemble robinet-détendeur ne comporte qu'un seul clapet, soit d'un clapet distinct du clapet de détente, lorsque l'ensemble robinet-détendeur comporte plusieurs clapets, en général deux clapets.

Lorsque l'opérateur souhaite obtenir du gaz, il doit alors obligatoirement réaliser deux, voire trois, manipulations successives, à savoir le branchement d'un raccord de sortie de gaz au corps de l'ensemble robinet-détendeur, l'ouverture du gaz par manipulation d'un robinet ou d'un levier de commande de la sortie de gaz et éventuellement un réglage du débit et/ou de la pression du gaz jusqu'à la valeur souhaitée.

Or, pour un certain nombre d'utilisations ou d'applications, ces manipulations ou opérations successives de l'ensemble robinet-détendeur par l'opérateur peuvent engendrer :
- un risque d'erreur donnant lieu à des dysfonctionnements, notamment de la part d'utilisateurs n'ayant pas ou peu de connaissances techniques, ce qui est le cas, en particulier, dans l'application au soutirage de CO₂ puisque les utilisateurs de CO₂ sous forme conditionné sont notamment des propriétaires
ou gérants de débits de boissons, telle la bière ou les autres boissons pétillantes servies à la pression dans ce type d'établissements, notamment les sodas sucrés, et
- un temps de mise en oeuvre significatif du gaz qui peut parfois s'avérer assez long jusqu'à obtenir le résultat souhaité.

Pour tenter de résoudre ce problème, il a déjà été proposé un robinet-détendeur plus simple d'utilisation que les robinets-détendeurs classiques, même pour les utilisateurs n'ayant pas de connaissance technique particulière, grâce à une diminution du nombre d'opérations à réaliser lors du soutirage du gaz par l'utilisateur, se caractérisant par la présence d'un raccord de sortie de gaz pouvant recevoir une prise utilisateur et délivrant du gaz détendu à une pression de détente non-réglable par l'utilisateur, c'est-à-dire à une pression fixe prédéterminée, par exemple 8 bars.

Or, actuellement les raccords de sortie de gaz de ce type du robinet-détendeur sont quasiment tous identiques ou très peu différents les uns des autres d'où il peut résulter un risque d'erreur important, lors de la connexion ou du raccordement de la prise utilisateur sur ledit raccord par un opérateur non averti.

On peut citer également le document FR-A-1 200 023 qui décrit un raccord à enclenchement/déclenchement automatique pour la jonction de deux tuyaux comportant un organe mâle comprenant une portion intermédiaire en saillie avec deux rampes situées de part et d'autre de cette saillie. Le profil externe de cette partie mâle comprend successivement une première portion avant de diamètre D1', une deuxième portion de diamètre D2' formée par la saillie et une troisième portion D3' de diamètre D3 située juste après la saillie. Ces trois portions sont telles que D1'<D2' mais D2' >D3' (D3'=D1').

Par ailleurs, le document EP-A-629937 enseigne un robinet muni de deux raccords de sorties. Le raccord comporte trois portions de diamètres externes successifs D1', D2', D3' (en partant de l'extrémité de sortie), tels que D1'>D2' et D3' >D1', alors que le raccord ne comprend que deux portions de diamètres externes successifs D"1 > D"2.

Le but de la présente invention est alors de résoudre le problème ci-dessus en proposant un robinet-détendeur amélioré.

La solution à ce problème consiste alors en un robinet-détendeur de fluide, de préférence à détente préréglée, comprenant :
- un corps principal au sein duquel est aménagé au moins un passage interne de fluide entre au moins un orifice d'entrée de fluide à détendre et au moins un orifice de sortie de fluide détendu,
- des moyens de détente de fluide agencés dans ou sur au moins une partie dudit passage interne de fluide, entre lesdits orifice d'entrée et orifice de sortie, et étant adaptés pour assurer une détente du fluide, et
- un raccord de sortie apte à délivrer ledit fluide détendu, le passage interne de fluide débouchant à l'extrémité de sortie dudit raccord de sortie de fluide détendu, et ledit raccord de sortie comportant un profil externe adapté à la réception et à la connexion sur celui-ci d'une prise utilisateur ayant un profil interne adapté et/ou complémentaire dudit profil externe dudit raccord,
caractérisé en ce que le raccord de sortie comporteau moins trois portions de raccord cylindriques, agencées successivement depuis l'extrémité de sortie dudit raccord de sortie vers l'extrémité de raccordement dudit raccord de sortie sur le corps du robinet-détendeur, la première portion P1 de raccord ayant un premier diamètre externe D1, la deuxième portion P2 de raccord ayant un deuxième diamètre externe D2 et la troisième portion P3 de raccord ayant un troisième diamètre externe D3, tels que : D1 < D2 < D3.

Selon le cas, le robinet-détendeur de l'invention peut comprendre l'une ou plusieurs des caractéristiques suivantes :
- D1 est compris entre 6 mm et 10 mm, D2 est compris entre 7 mm et 18 mm et D3 est compris entre 11 mm et 19 mm.
- le raccord de sortie comprend, en outre, une quatrième portion P4 de raccord cylindrique ayant un quatrième diamètre externe D4, située entre la troisième portion P3 de diamètre externe D3 et l'extrémité de raccordement du raccord de sortie sur le corps du robinet-détendeur, avec D3 < D4 et D4 compris entre 12 mm et 21 mm ; l'extrémité de raccordement du raccord de sortie sur le corps du robinet-détendeur étant l'extrémité du raccord par laquelle ledit raccord est fixée ou rendu solidaire du corps de robinet-détendeur.
- le raccord de sortie comprend, en outre, une cinquième portion P5 cylindrique de cinquième diamètre externe D5 située entre la quatrième portion P4 de diamètre externe D4 et l'extrémité de raccordement dudit raccord de sortie sur le corps du robinet-détendeur, avec D5 > D4 et D5 compris entre 15 mm et 27 mm.
- le raccord de sortie comprend, en outre, une sixième portion P6 cylindrique de diamètre externe D6 située entre la troisième portion P3 de diamètre externe D3 et la quatrième portion P4 de diamètre externe D4, avec D3>D6 et D6 compris entre 7 mm et 18 mm, de préférence compris entre 8 mm et 17 mm.
- D1 est compris entre 7 mm et 9 mm, D2 est compris entre 8 mm et 17 mm, D3 est compris entre 12 mm et 18 mm, D4 est compris entre 13 mm et 20 mm, D5 est compris entre 16 mm < D5 < 26 mm et/ou D6 est compris entre 8 et 12 mm.
- la première portion P1 de raccord a une longueur externe L1 comprise entre 6 mm et 9 mm, de préférence entre 7 mm et 8.5 mm.
- la deuxième portion P2 de raccord a une longueur externe L2 comprise entre 1.5 mm et 4 mm, de préférence entre 2 mm et 3.5 mm.
- la troisième portion P3 de raccord a une longueur externe L3 comprise entre 0.5 et 3 mm, de préférence de l'ordre de 1.2 mm.
- la quatrième portion P4 de raccord a une longueur externe L4 comprise entre 2 mm et 6 mm, et/ou de préférence de l'ordre de 3.5 mm.
- la cinquième portion P5 de raccord a une longueur externe L5 comprise entre 2 mm et 6 mm, de préférence de l'ordre de 3.5 mm.
- la sixième portion P6 de raccord a une longueur externe L6 comprise entre 2.5 mm et 5 mm, de préférence 3 et 4.5 mm.
- la deuxième portion P2 de raccord et la troisième portion P3 de raccord sont séparées par une rampe et/ou la première portion P1 de raccord porte un chanfrein au niveau de l'extrémité de sortie du raccord de sortie.
- le raccord de sortie comprend au moins clapet de raccord apte à se déplacer en translation dans le raccord de sortie, lorsqu'on connecte audit raccord une prise de sortie utilisateur comprenant des moyens d'actionnement du clapet qui coopèrent avec ledit clapet de manière à obtenir le déplacement du clapet.
- les moyens de détente de fluide comprennent un clapet de détente positionné dans une position de détente fixe et non modifiable par l'utilisateur correspondant à ladite valeur de pression préfixée.
- les moyens de détente de fluide permettent d'assurer une détente du fluide jusqu'à une valeur de pression préfixée comprise entre 4 bars et 12 bars, de préférence encore entre 5 bars et 10 bars.
- le clapet de raccord se déplace en translation dans le raccord de sortie, lorsqu'on connecte audit raccord une prise de sortie utilisateur comprenant des moyens d'actionnement du clapet de raccord qui coopèrent avec ledit clapet de manière à obtenir ledit déplacement.
- le raccord de sortie a un profil adapté pour coopérer avec un système de guidage et verrouillage aménagé dans une prise de sortie utilisateur à profil complémentaire.
- le raccord de sortie comporte un moyen à ressort de clapet coopérant avec le clapet de raccord et au moins une garniture et une portée permettant d'obtenir une étanchéité fluidique de l'orifice de sortie de fluide porté par le raccord.

Selon un autre aspect, l'invention porte aussi sur un système de transfert de fluide comprenant un robinet-détendeur de gaz selon l'invention et une prise de sortie de gaz ayant un profil interne complémentaire du profil externe dudit raccord de sortie et comportant un corps dans lequel est aménagé un système de guidage et de verrouillage interne servant à recevoir et guider l'extrémité du raccord de sortie du robinet-détendeur et, en outre, à empêcher la déconnexion de la prise dudit raccord en venant coopérer avec le profil externe de la paroi périphérique externe du raccord, ladite prise comprenant, par ailleurs, un clapet de prise venant normalement prendre appui contre un siège de clapet et déplaçable en translation selon l'axe longitudinal de la prise.

L'invention concerne aussi un récipient de fluide sous pression, en particulier une bouteille de gaz, équipée d'un robinet-détendeur selon l'invention, de préférence ledit ensemble est inséré dans et protégé par un capotage de protection monté sur le récipient.

La présente invention va maintenant être mieux comprise grâce à la description détaillée qui suit, donnée en références aux figures annexées.

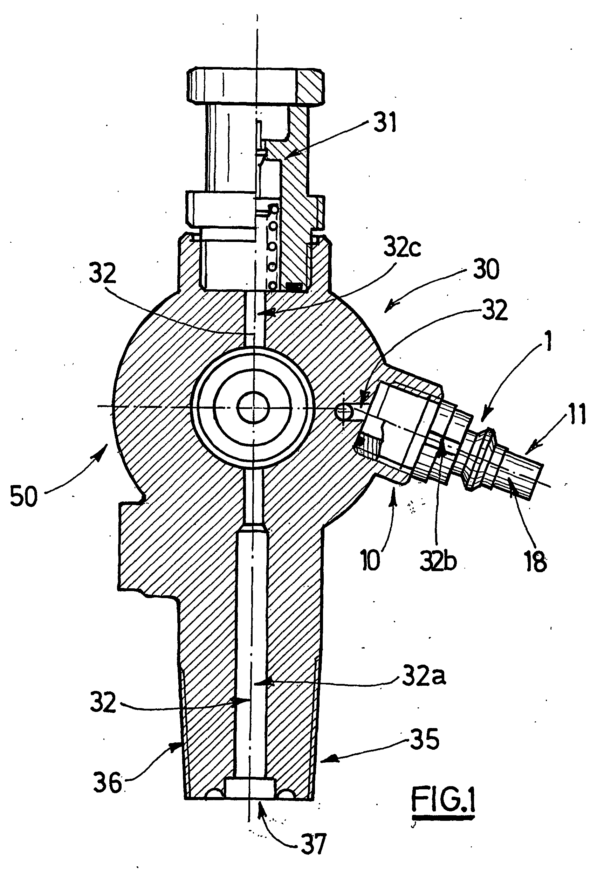

La figure 1 représente une vue en coupe longitudinale d'un robinet-détendeur 50 selon l'invention dont le corps 30 renferme une partie faisant office de détendeur. Le niveau de détente est soit préréglé à une pression donnée non modifiable par l'utilisateur, par exemple 8 bars, soit réglable par l'utilisateur en fonction du niveau de pression requit dans l'application considérée.

Le réglage de la pression à sa valeur fixe souhaitée est réalisé de manière connue en soi et ne sera pas détaillé ci-après.

Selon l'invention, le corps 30 comprend, par ailleurs, un raccord 1 de sortie de gaz à obturation permettant une connection et une déconnexion facile et rapide d'une prise de sortie à ce robinet-détendeur 50 de manière à pouvoir récupérer et utiliser ensuite le gaz détendu à ladite pression de détente en aval du détendeur.

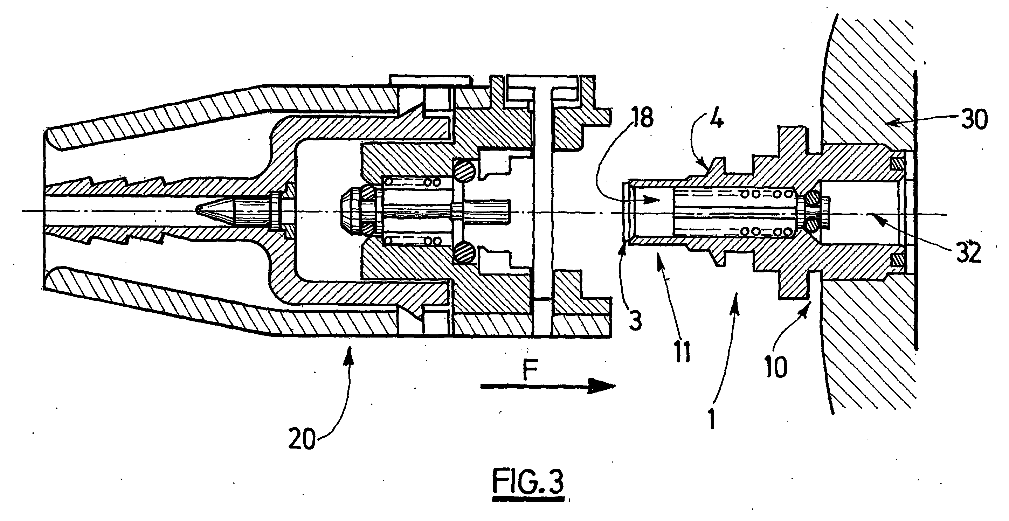

L'ouverture du gaz cheminant dans le corps 30 de l'ensemble robinet-détendeur 50 est commandée en aval de la partie détendeur et est synchronisée avec le branchement de la prise de sortie de gaz (voir figure 3) par l'utilisateur sur le raccord 1 de sortie de gaz.

La connexion de cette prise de sortie ou de soutirage de gaz au raccord 1 de sortie de gaz permet d'obtenir, outre le branchement proprement-dit, une étanchéité suivie d'une libération du gaz à la pression voulue.

Par ailleurs, le remplissage d'une bouteille de gaz équipée de ce type de robinet-détendeur 50 peut se faire sans démonter l'ensemble et ce, simplement en alimentant la valve de remplissage 31 avec du gaz sous pression (ahute pression), lequel chemine alors à travers le corps 30, par l'intermédiaire du passage interne 32, 32c, 32a reliant ladite valve 31 de remplissage à l'embout 35 de connexion permettant de fixer le robinet-détendeur 50 sur le col d'une bouteille de gaz. Le passage interne 32, 32c de gaz traverse axialement l'embout 35 de connection qui porte un filetage externe 36.

En fait, le passage 32 comprend ici trois portions 32a, 32b et 32c. Les portions 32c et 32a du passage 32 interne relient, comme expliqué ci-dessus, la valve de remplissage 31 à l'embout 35 de connexion et donc à l'intérieur de la bouteille, et sont utilisés lors du remplissage avec du gaz à haute pression, alors que les passages 32a et 32b relient l'intérieur de la bouteille, via l'embout 35, à l'orifice de sortie 18 porté par le raccord 1 de sortie de l'invention de manière à permettre d'alimenter l'utilisateur en gaz à pression basse, c'est-à-dire à une pression réduite par rapport à la pression du gaz dans le récipient portant le robinet-détendeur 50.

Grâce à ce type de robinet-détendeur, la mise en oeuvre du gaz à pression basse est réduite à une seule opération simple et rapide.

Si la prise utilisateur, alimentant le circuit de gaz de l'utilisateur, est aussi du type à obturation, l'utilisation d'un robinet-détendeur selon l'invention assure aussi la conservation de la qualité du gaz.

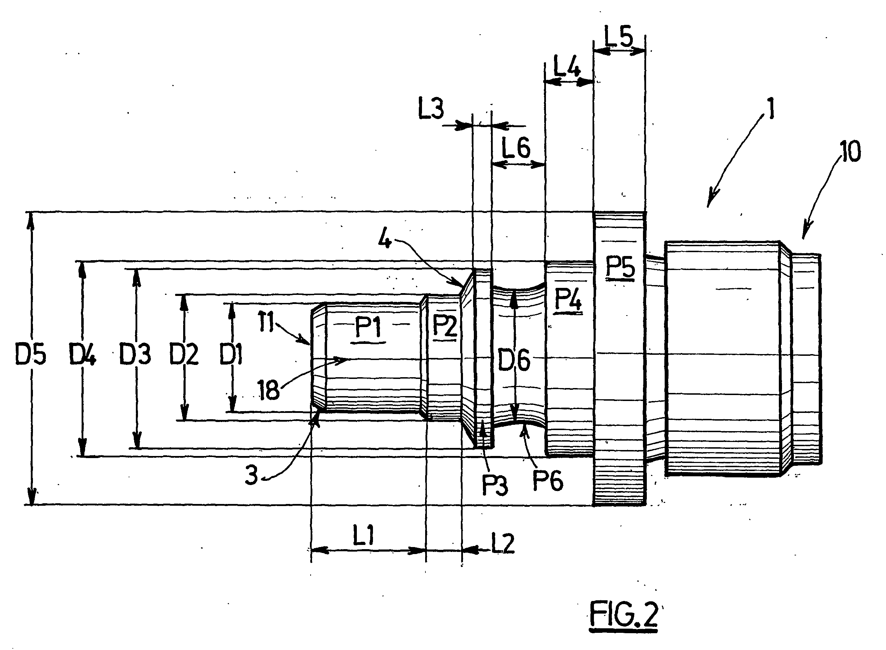

La figure 2 représente une vue longitudinale de côté d'un raccord 1 de sortie pour robinet-détendeur 50 selon l'invention, sur lequel vient se connecter et se fixer une prise 20 utilisateur qui peut revêtir des formes de réalisation différentes, telle qu'une prise 20 avec bague ou anneau de fixation ou, selon le cas, avec bouton de commande illustrée sur la figure 3.

Le robinet-détendeur de gaz comprend, en outre, comme détaillé sur les figures 1 et 2, un corps 30 principal au sein duquel est aménagé le passage 32 interne de gaz entre un orifice d'entrée de gaz à détendre 37, par exemple le gaz sous une pression haute de 100 bars, porté par l'embout 35 et un orifice de sortie 18 de gaz détendu à la pression souhaitée, par exemple une pression fixe de 8 bars. La détente est réalisée par des moyens de détente de fluide classiques, non montrés, agencés sur le trajet du gaz, dans ou sur une partie dudit passage interne 32 de gaz, entre les orifice d'entrée 37 et orifice de sortie 18. La distribution du gaz à l'utilisateur se fait via le raccord de sortie 1 de gaz selon l'invention apte à délivrer le gaz détendu, c'est-à-dire après détente par lesdits moyens de détente qui comprennent notamment un clapet de détente, un orifice de détente et un siège de clapet coopérant les uns avec les autres de façon connue pour assurer une détende du gaz à haute pression.

Le passage interne 32 de gaz débouche (en 32b) à l'extrémité 11 de sortie de ce raccord 1 de sortie de fluide détendu, et comporte, par ailleurs, un profil externe adapté à la réception et à la connexion sur celui-ci d'une prise utilisateur 20 ayant un profil interne adapté et/ou complémentaire dudit profil externe dudit raccord,

De manière à résoudre le problème de l'invention, le raccord de sortie 1 comporte plusieurs portions P1 à P6 de raccord cylindriques, agencées successives depuis l'extrémité de sortie 11 du raccord de sortie 1 vers l'extrémité de raccordement 10 de celui-ci sur le corps du robinet-détendeur. Les portions de raccord P1 à P6 respectivement, ont chacune un diamètre externe D1 à D6 respectivement, tels que définis ci-avant.

A titre d'exemple, les dimensions (en mm) des différents diamètres D1 à D6 de raccords 1 de plusieurs robinets-détendeurs conformes à l'invention sont données dans le tableau 1 ci-après.

**Tableau I**

| Diamètres | D1 | D2 | D3 | D4 | D5 | D6 |
|---|---|---|---|---|---|---|
| Exemple 1 | 8 | 9 | 13 | 14 | 21 | 9.5 |
| Exemple 2 | 8 | 12 | 13 | 14 | 17 | 9.5 |
| Exemple 3 | 8 | 9 | 13 | 15 | 20 | 9.5 |
| Exemple 4 | 8 | 10 | 13 | 15 | 19 | 9.5 |
| Exemple 5 | 8 | 11 | 13 | 14 | 18 | 9.5 |
| Exemple 6 | 8 | 13 | 17 | 18 | 25 | 9.5 |
| Exemple 7 | 8 | 16 | 17 | 18 | 21 | 9.5 |
| Exemple 8 | 8 | 13 | 17 | 19 | 24 | 9.5 |
| Exemple 9 | 8 | 14 | 17 | 19 | 23 | 9.5 |
| Exemple 10 | 8 | 15 | 17 | 18 | 22 | 9.5 |

Par ailleurs, les longueurs L1 à L6 des différentes portions P1 à P6 des exemples 1 à 10 ci-avant étaient comme données dans le tableau II ci-après.

**Tableau II**

| | | | | | | |
|---|---|---|---|---|---|---|
| Longueurs des portions P1 à P6 (en mm) | L1 | L2 | L3 | L4 | L5 | L6 |
| | 7.75 | 2.75 | 1.2 | 3.5 | 3.5 | 3.8 |

Sur la figure 3, on voit que, lors de la connexion (sens de la flèche F), de la prise 20 utilisateur sur le raccord 1, la partie interne de ladite prise 20 vient s'enficher sur le profil externe du raccord 1 de sortie.

Plus précisément, la prise utilisateur 20 comprend une extrémité de fixation qui comporte un logement interne dont le profil est adapté et complémentaire de celui du raccord 1 et qui est destiné à recevoir l'extrémité en saillie du raccord 1.

Le fait de doter le raccord 1 de plusieurs diamètres D1 à D5 différents et croissants, à partir de l'extrémité de sortie 11, permet non seulement de faciliter la connexion de la prise sur le raccord mais aussi d'éviter tout risque d'erreur important, lors de la connexion ou du raccordement de la prise utilisateur sur ledit raccord par un opérateur non averti, puisqu'une prise ayant un profil non spécifique de celui du raccord ne pourra pas y être raccordée.

En outre, afin de rendre la connexion encore plus rapide et efficace, la prise 20 comprend aussi un système de guidage et verrouillage interne servant, d'une part, à recevoir et guider l'extrémité 11 du raccord 1 et, d'autre part, à empêcher la déconnexion de la prise 20 du raccord 1, après raccordement, en venant coopérer avec les portions P3 et P6 du raccord, lesquelles sont situées périphériquement sur le raccord 1 cylindrique et constituent, respectivement, une partie annulaire faisant saillie (P3) et une portion annulaire évidée formant gorge (P6).

Par ailleurs, la prise 20 utilisateur comprend un système classique de contrôle du passage de fluide depuis le raccord vers la prise 20, lequel comporte notamment un clapet de prise muni d'une portion en saillie venant normalement prendre appui contre un siège de clapet de manière à obturer le passage de fluide de la prise au moyen de la portion en saillie portée par le clapet. Un moyen élastique, tel un ressort, exerce une force de poussée sur la partie arrière du clapet tendant à le repousser vers son siège. A l'inverse, lorsque le clapet est décollé de son siège, le fluide peut circuler dans la prise 20 depuis son extrémité d'entrée, à travers le passage de fluide duquel est alors extraite la portion en saillie du clapet, et est évacué via le passage central de la prise 20. Une garniture appropriée permet d'obtenir une étanchéité entre le raccord 1 et la prise 20, lorsqu'ils sont connectés l'un à l'autre.

Par ailleurs, le raccord 1 comprend, quant à lui, un clapet de raccord et un ressort de clapet, ainsi qu'une garniture venant étancher l'orifice de sortie du fluide au niveau d'une portée.

La mise en position de la prise 20 sur le raccord 1 et le détrompage lié au profil spécifique de l'ensemble sont réalisés par enfichage en translation de la prise 20 utilisateur sur le raccord 1 de sortie du robinet-détendeur. L'étanchéité est obtenue progressivement en continuant l'insertion de la prise 20 sur l'extrémité de sortie cylindrique du raccord 1. Lorsque l'étanchéité est réalisée, il s'opère une ouverture progressive des clapets de la prise et du raccord, respectivement, lesquels coopérant l'un avec l'autre en se repoussant mutuellement l'un et l'autre de manière synchronisée ou, selon le cas, successivement l'un après l'autre. Par ailleurs, le système de verrouillage vient jouer son rôle de manière à permettre une fixation solidaire de la prise 20 sur le raccord 1. Dès lors, les clapets étant décollés de leurs sièges respectifs, le cycle de détente à la pression souhaitée peut commencer et le gaz détendu chemine alors vers la prise 20 utilisateur et est ensuite acheminé, via des moyens adaptés, notamment des canalisations, flexibles ou analogues, jusqu'au site d'utilisation du gaz. A l'inverse la déconnexion peut être réalisée en procédant de manière inversée.

Le robinet-détendeur de l'invention est particulièrement bien adapté pour délivrer un gaz sous pression destiné à pressuriser une boisson alimentaire, notamment de la bière ou un soda.

## Revendications

1. Robinet-détendeur (50) de fluide comprenant :
- un corps principal (30) au sein duquel est aménagé au moins un passage interne (32, 32a, 32b) de fluide entre au moins un orifice d'entrée (37) de fluide à détendre et au moins un orifice de sortie (11) de fluide détendu,
- des moyens de détente de fluide agencés dans ou sur au moins une partie dudit passage interne de fluide, entre lesdits orifice d'entrée (37) et orifice de sortie (11), et étant adaptés pour assurer une détente du fluide, et
- un raccord de sortie (1) apte à délivrer ledit fluide détendu, le passage interne de fluide (32, 32a, 32b) débouchant (32b) à l'extrémité (11) de sortie dudit raccord (1) de sortie de fluide détendu, et ledit raccord de sortie (1) comportant un profil externe adapté à la réception et à la connexion sur celui-ci d'une prise utilisateur ayant un profil interne adapté ou complémentaire dudit profil externe dudit raccord,
**caractérisé en ce que** le raccord de sortie (1) comporte au moins trois portions (P1 à P3) de raccord cylindriques, agencées successivement depuis l'extrémité de sortie (11) dudit raccord de sortie (1) vers l'extrémité de raccordement (10) dudit raccord de sortie (1) sur le corps (30) du robinet-détendeur (50), la première portion (P1) de raccord ayant un diamètre externe (D1), la deuxième portion (P2) de raccord ayant un diamètre externe (D2) et la troisième portion (P3) de raccord ayant un diamètre externe (D3), tels que D1 < D2 < D3.

2. Robinet-détendeur selon la revendication 1, **caractérisé en ce que** le raccord de sortie (12) comprend, en outre, une quatrième portion (P4) de raccord cylindrique ayant un diamètre externe (D4), située entre la troisième portion (P3) de diamètre externe (D3) et l'extrémité de raccordement (10) dudit raccord de sortie (1) sur le corps du robinet-détendeur, avec D3 < D4 et D4 compris entre 12 mm et 21 mm.

3. Robinet-détendeur selon l'une des revendications 1 ou 2, **caractérisé en ce que** le raccord de sortie (12) comprend, en outre, une cinquième portion (P5) cylindrique de diamètre externe (D5) située entre la quatrième portion (P4) de diamètre externe (D4) et l'extrémité de raccordement (10) dudit raccord de sortie (1) sur le corps du robinet-détendeur, avec D5 > D4 et D5 compris entre 15 mm et 27 mm.

4. Robinet-détendeur selon l'une des revendications 1 à 3, **caractérisé en ce que** le raccord de sortie (12) comprend, en outre, une sixième portion (P6) cylindrique de diamètre externe (D6) située entre la troisième portion (P3) de diamètre externe (D3) et la quatrième portion (P4) de diamètre externe (D4), avec D3>D6 et D6 compris entre 7 mm et 18 mm, de préférence compris entre 8 mm et 17 mm.

5. Robinet-détendeur selon l'une des revendications 1 à 4, **caractérisé en ce que** D1 est compris entre 7 mm et 9 mm, D2 est compris entre 8 mm et 17 mm, D3 est compris entre 12 mm et 18 mm, D4 est compris entre 13 mm et 20 mm, D5 est compris entre 16 mm et 26 mm et/ou D6 est compris entre 8 et 12 mm.

6. Robinet-détendeur selon l'une des revendications 1 à 5, **caractérisé en ce que** :
- la première portion (P1) de raccord a une longueur externe (L1) comprise entre 6 mm et 9 mm, de préférence entre 7 mm et 8.5 mm,
- la deuxième portion (P2) de raccord a une longueur externe (L2) comprise entre 1.5 mm et 4 mm, de préférence entre 2 mm et 3.5 mm,
- la troisième portion (P3) de raccord a une longueur externe (L3) comprise entre 0.5 et 3 mm, de préférence de l'ordre de 1.2 mm,
- la quatrième portion (P4) de raccord a une longueur externe (L4) comprise entre 2 mm et 6 mm, et/ou de préférence de l'ordre de 3.5 mm,
- la cinquième portion (P5) de raccord a une longueur externe (L5) comprise entre 2 mm et 6 mm, de préférence de l'ordre de 3.5 mm, ou
- la sixième portion (P6) de raccord a une longueur externe (L6) comprise entre 2.5 mm et 5 mm, de préférence 3 et 4.5 mm.

7. Robinet-détendeur selon l'une des revendications 1 à 6, **caractérisé en ce que** la deuxième portion (P2) de raccord et la troisième portion (P3) de raccord sont séparées par une rampe (4) ou **en ce que** la première portion (P1) de raccord porte un chanfrein (3) au niveau de l'extrémité de sortie (11) du raccord de sortie (1).

8. Robinet-détendeur selon l'une des revendications 1 à 7, **caractérisé en ce que** le raccord de sortie (1) comprend au moins clapet de raccord apte à se déplacer en translation dans le raccord (1) de sortie, lorsqu'on connecte audit raccord (2) une prise (20) de sortie utilisateur comprenant des moyens d'actionnement du clapet qui coopèrent avec ledit clapet de manière à obtenir le déplacement du clapet.

9. Ensemble formé d'un robinet-détendeur selon l'une des revendications 1 à 8 et d'une prise (20) de sortie utilisateur ayant un profil interne complémentaire du profil externe dudit raccord de sortie (1) du robinet-détendeur (50).

10. Récipient de fluide sous pression, en particulier une bouteille de gaz, équipé d'un robinet-détendeur selon l'une des revendications 1 à 8, de préférence l'ensemble est inséré dans et est protégé par un capotage de protection monté sur le récipient.

11. Utilisation d'un robinet-détendeur (50) selon l'une des revendications 1 à 8 pour délivrer un gaz sous pression destiné à pressuriser une boisson alimentaire, notamment de la bière ou un soda.

12. Système de transfert de fluide comprenant :
- un robinet-détendeur (50) selon l'une des revendications 1 à 8, et
- une prise (20) de sortie de gaz ayant un profil interne complémentaire du profil externe dudit raccord de sortie (1) et comportant un corps dans lequel est aménagé un système de guidage et de verrouillage interne servant à recevoir et guider l'extrémité (11) du raccord (1) de sortie du robinet-détendeur et, en outre, à empêcher la déconnexion de la prise (20) dudit raccord (1) en venant coopérer avec le profil externe de la paroi périphérique externe du raccord (1), ladite prise (20) comprenant, par ailleurs, un clapet de prise venant normalement prendre appui contre un siège de clapet et déplaçable en translation selon l'axe longitudinal de la prise.

13. Robinet-détendeur selon la revendication 1, **caractérisé en ce que** D1 est compris entre 6 mm et 10 mm, D2 est compris entre 7 et 18 mm et D3 est compris entre 11 et 19 mm.

## Patentansprüche

1. Druckminderventil (50) für ein Fluid, umfassend:
- einen Hauptkörper (30), in dem mindestens ein innerer Fluiddurchgang (32, 32a, 32b) zwischen mindestens einer Eintrittsöffnung (37) des vom Druck zu entlastenden Fluids und mindestens einer Austrittsöffnung (11) des druckentlasteten Fluids vorgesehen ist,
- Druckmindermittel für das Fluid, die in oder auf mindestens einem Teil des inneren Fluiddurchgangs zwischen der Eintrittöffnung (37) und der Austrittsöffnung (11) vorgesehen und derart ausgeführt sind, dass sie eine Druckminderung des Fluids sicher stellen, und
- ein Ausgangsanschlussstück (1), das das druckentlastete Fluid liefern kann, wobei der innere Fluiddurchgang (32, 32a, 32b) am Austrittsende (11) des Ausgangsanschlussstückes (1) für das druckentlastete Fluid mündet (32b),
wobei das Ausgangsanschlussstück ein äußeres Profil umfasst, das an die Aufnahme und den Anschluss einer Benutzerkupplung an dieses angepasst ist, die ein inneres Profil aufweist, das an das äußere Profil des Anschlussstückes angepasst oder zu diesem komplementär ist,
**dadurch gekennzeichnet, dass** das Ausgangsanschlussstück (1) mindestens drei zylindrische Anschlussabschnitte (P1 bis P3) umfasst, die nacheinander vom Austrittsende (11) des Ausgangsanschlussstückes (1) zum Anschlussende (10) des Ausgangsanschlussstückes (1) am Körper (30) des Druckminderventils (50) angeordnet sind,
wobei der erste Anschlussabschnitt (P1) einen äußeren Durchmesser (D1), der zweite Anschlussabschnitt (P2) einen äußeren Durchmesser (D2) und der dritte Anschlussabschnitt (P3) einen äußeren Durchmesser (D3), so dass gilt D1 < D2 < D3, besitzen.

2. Druckminderventil nach Anspruch 1, **dadurch gekennzeichnet, dass** das Ausgangsanschlussstück (12) ferner einen vierten zylindrischen Anschlussabschnitt (P4) mit einem äußeren Durchmesser (D4) umfasst, der sich zwischen dem dritten Abschnitt (P3) mit einem äußeren Durchmesser (D3) und dem Anschlussende (10) des Ausgangsanschlussstückes (1) auf dem Körper des Druckminderventils befindet, wobei D3 < D4 ist und D4 zwischen 12 mm und 21 mm beträgt.

3. Druckminderventil nach einem der Ansprüche 1 oder 2, **dadurch gekennzeichnet, dass** das Ausgangsanschlussstück (12) ferner einen fünften zylindrischen Abschnitt (P5) mit einem äußeren Durchmesser (D5) umfasst, der sich zwischen dem vierten Abschnitt (P4) mit einem äußeren Durchmesser (D4) und dem Anschlussende (10) des Ausgangsanschlussstückes (1) auf dem Körper des Druckminderventils befindet, wobei D5 > D4 ist und D5 zwischen 15 mm und 27 mm beträgt.

4. Druckminderventil nach einem der Ansprüche 1 bis 3, **dadurch gekennzeichnet, dass** das Ausgangsanschlussstück (12) ferner einen sechsten zylindrischen Abschnitt (P6) mit einem äußeren Durchmesser (D6) umfasst, der sich zwischen dem dritten Abschnitt (P3) mit einem äußeren Durchmesser (D3) und dem vierten Abschnitt (P4) mit einem äußeren Durchmesser (D4) befindet, wobei D3 > D6 ist und D6 zwischen 7 mm und 18 mm, vorzugsweise zwischen 8mm und 17 mm, beträgt.

5. Druckminderventil nach einem der Ansprüche 1 bis 4, **dadurch gekennzeichnet, dass** D1 zwischen 7 mm und 9 mm, D2 zwischen 8 mm und 17 mm, D3 zwischen 12 mm und 18 mm, D4 zwischen 13 mm und 20 mm, D5 zwischen 16 mm und 26 mm und/oder D6 zwischen 8 mm und 12 mm beträgt.

6. Druckminderventil nach einem der Ansprüche 1 bis 5, **dadurch gekennzeichnet, dass**:
- der erste Anschlussabschnitt (P1) eine äußere Länge (L1) zwischen 6 mm und 9 mm, vorzugsweise zwischen 7 mm und 8,5 mm aufweist,
- der zweite Anschlussabschnitt (P2) eine äußere Länge (L2) zwischen 1,5 mm und 4 mm, vorzugsweise zwischen 2 mm und 3,5 mm aufweist,
- der dritte Anschlussabschnitt (P3) eine äußere Länge (L3) zwischen 0,5 mm und 3 mm, vorzugsweise von ungefähr 1,2 mm aufweist,
- der vierte Anschlussabschnitt (P4) eine äußere Länge (L4) zwischen 2 mm und 6 mm, und/oder vorzugsweise von ungefähr 3,5 mm aufweist,
- der fünfte Anschlussabschnitt (P5) eine äußere Länge (L5) zwischen 2 mm und 6 mm, vorzugsweise von ungefähr 3,5 mm aufweist,
- der sechste Anschlussabschnitt (P6) eine äußere Länge (L6) zwischen 2,5 mm und 5 mm, vorzugsweise zwischen 3 mm und 4,5 mm aufweist.

7. Druckminderventil nach einem der Ansprüche 1 bis 6, **dadurch gekennzeichnet, dass** der zweite Anschlussabschnitt (P2) und der dritte Anschlussabschnitt (P3) durch eine Rampe (4) getrennt sind, oder dass der erste Anschlussabschnitt (P1) eine Schräge (3) im Bereich des Austrittsendes (11) des Ausgangsanschlussstückes (1) trägt.

8. Druckminderventil nach einem der Ansprüche 1 bis 7, **dadurch gekennzeichnet, dass** das Ausgangsanschlussstück (1) mindestens eine Anschlussklappe umfasst, die sich in Translation in dem Ausgangsanschlussstück (1) verschieben kann, wenn an den Anschluss (2) eine Benutzerausgangskupplung (20) angeschlossen wird, die Mittel zur Betätigung der Klappe umfasst, die mit der Klappe derart zusammenwirken, dass die Verschiebung der Klappe erzielt wird.

9. Einheit, gebildet von einem Druckminderventil nach einem der Ansprüche 1 bis 8 und einer Benutzerausgangskupplung (20) mit einem zu dem Außenprofil des Ausgangsanschlussstückes (1) des Druckminderventils (50) komplementären Innenprofil.

10. Druckfluidbehälter, insbesondere eine Gasflasche, versehen mit einem Druckminderventil nach einem der Ansprüche 1 bis 8, wobei die Einheit vorzugsweise in eine auf dem Behälter befestigte Schutzkappe eingesetzt und von dieser geschützt ist.

11. Verwendung eines Druckminderventils (50) nach einem der Ansprüche 1 bis 8, um ein Gas unter Druck zu liefern, das dazu bestimmt ist, ein Getränk, insbesondere Bier oder Soda, unter Druck zu halten.

12. Fluidweiterleitungssystem, umfassend:
- ein Druckminderventil (50) nach einem der Ansprüche 1 bis 8 und
- eine Gasausgangskupplung (20) mit einem zum Außenprofil des Ausgangsanschlusses (1) komplementären Innenprofil, umfassend einen Körper, in dem ein Führungs- und Innenverriegelungssystem vorgesehen ist, das dazu dient, das Ende (11) des Ausgangsanschlussstückes (1) des Druckminderventils aufzunehmen und zu führen und ferner das Lösen der Kupplung (20) von dem Anschluss (1) zu verhindern, wobei es mit dem Außenprofil der äußeren Umfangswand des Anschlussstückes (1) zusammenwirkt, wobei die Kupplung (20) überdies eine Kupplungsklappe umfasst, die normalerweise am Sitz der Klappe aufliegt und in Translation entlang der Längsachse der Kupplung verschiebbar ist.

13. Druckminderventil nach Anspruch 1, **dadurch gekennzeichnet, dass** D1 zwischen 6 mm und 10 mm, D2 zwischen 7 mm und 18 mm und D3 zwischen 11 mm und 19 mm beträgt.

## Claims

1. Fluid expansion valve (50) comprising:
- a main body (30) within which there is formed at least one internal passage (32, 32a, 32b) for fluid between at least one inlet port (37) for fluid whose pressure is to be reduced, and at least one outlet port (11) for reduced-pressure fluid,
- fluid pressure-reducing means arranged in or on at least part of the said internal fluid passage, between the said inlet port (37) and the said outlet port (11), and designed to reduce the pressure of the fluid, and
- an outlet coupling (1) able to deliver the said reduced-pressure fluid, the internal fluid passage (32, 32a, 32b) opening (32b) to the outlet end (11) of the said reduced-pressure fluid outlet coupling (1) and the said outlet coupling (1) comprising an external profile designed to take and have connected to it a user connector which has an internal profile tailored to or complementing the said external profile of the said coupling,
**characterized in that** the outlet coupling (1) comprises at least three cylindrical coupling portions (P1 to P3) arranged in succession from the outlet end (11) of the said outlet coupling (1) towards the end (10) via which the said outlet coupling (1) is coupled to the body (30) of the expansion valve (50), the first coupling portion (P1) having an outside diameter (D1), the second coupling portion (P2) having an outside diameter (D2) and the third coupling portion (P3) having an outside diameter (D3), which diameters are such that D1 < D2 < D3.

2. Expansion valve according to Claim 1, **characterized in that** the outlet coupling (12) furthermore comprises a fourth cylindrical coupling portion (P4) having an outside diameter (D4), situated between the third portion (P3) of outside diameter (D3) and the end (10) via which the said outlet coupling (1) is coupled to the body of the expansion valve, with D3 < D4 and D4 between 12 mm and 21 mm.

3. Expansion valve according to either of Claims 1 and 2, **characterized in that** the outlet coupling (12) further comprises a fifth cylindrical portion (P5) of outside diameter (D5) situated between the fourth portion (P4) of outside diameter (D4) and the end (10) via which the said outlet coupling (1) is coupled to the body of the expansion valve, with D5 > D4 and D5 between 15 mm and 27 mm.

4. Expansion valve according to one of Claims 1 to 3, **characterized in that** the outlet coupling (12) further comprises a sixth cylindrical portion (P6) of outside diameter (D6) situated between the third portion (P3) of outside diameter (D3) and the fourth portion (P4) of outside diameter (D4), with D3 > D6 and D6 between 7 mm and 18 mm, preferably between 8 mm and 17 mm.

5. Expansion valve according to one of Claims 1 to 4, **characterized in that** D1 is between 7 mm and 9 mm, D2 is between 8 mm and 17 mm, D3 is between 12 mm and 18 mm, D4 is between 13 mm and 20 mm, D5 is between 16 mm and 26 mm and/or D6 is between 8 and 12 mm.

6. Expansion valve according to one of Claims 1 to 5, **characterized in that**:
- the first coupling portion (P1) has an external length (L1) of between 6 mm and 9 mm, preferably between 7 mm and 8.5 mm,
- the second coupling portion (P2) has an external length (L2) of between 1.5 mm and 4 mm, preferably between 2 mm and 3.5 mm,
- the third coupling portion (P3) has an external length (L3) of between 0.5 and 3 mm, preferably of the order of 1.2 mm,
- the fourth coupling portion (P4) has an external length (L4) of between 2 mm and 6 mm and/or preferably of the order of 3.5 mm,
- the fifth coupling portion (P5) has an external length (L5) of between 2 mm and 6 mm, preferably of the order of 3.5 mm, or
- the sixth coupling portion (P6) has an external length (L6) of between 2.5 mm and 5 mm, preferably 3 and 4.5 mm.

7. Expansion valve according to one of Claims 1 to 6, **characterized in that** the second coupling portion (P2) and the third coupling portion (P3) are separated by a ramp (4) or **in that** the first coupling portion (P1) has a chamfer (3) at the outlet end (11) of the outlet coupling (1).

8. Expansion valve according to one of Claims 1 to 7, **characterized in that** the outlet coupling (1) comprises at least one coupling valve shutter able to move in translation in the outlet coupling (1) when a user outlet connector (20) comprising means of actuating the valve shutter which collaborate with the said valve shutter so as to move the shutter is connected to the said coupling (2).

9. Assembly formed of a expansion valve according to one of Claims 1 to 8 and of a user outlet connector (20) having an internal profile that complements the external profile of the said outlet coupling (1) of the expansion valve (50).

10. Container of pressurized fluid, particularly a gas cylinder, equipped with a expansion valve according to one of Claims 1 to 8, preferably the assembly is inserted in and protected by a protective bonnet mounted on the container.

11. Use of a expansion valve (50) according to one of Claims 1 to 8 for delivering a gas under pressure intended to pressurize a drink, particularly beer or a fizzy drink.

12. System for transferring fluid comprising:
- a expansion valve (50) according to one of Claims 1 to 8, and
- a gas outlet connector (20) having an internal profile which complements the external profile of the said outlet coupling (1) and comprising a body in which there is formed an internal guidance and locking system used to receive and guide the end (11) of the outlet coupling (1) of the expansion valve and, also, to prevent the connector (20) from becoming disconnected from the said coupling (1) by collaborating with the external profile of the external peripheral wall of the coupling (1), the said connector (20) also comprising a connector valve shutter which normally rests against a valve seat and can be moved in translation along the longitudinal axis of the connector.

13. Expansion valve according to Claim 1, **characterized in that** D1 is between 6 mm and 10 mm, D2 is between 7 and 18 mm and D3 is between 11 and 19 mm.
